# EUROPEAN PATENT SPECIFICATION

(11) **EP 1 668 936 B1**
(45) Date of publication and mention of the grant of the patent: **07.11.2007**
(21) Application number: 04766784.5
(22) Date of filing: 14.09.2004
(51) Int. Cl.: H04Q 7/26, H04M 1/725

(54) **WIRELESS TELEPHONE SYSTEM INCLUDING VOICE OVER IP AND POTS**
DRAHTLOSES TELEFONSYSTEM MIT VOICE-OVER-IP UND POTS
SYSTEME DE TELEPHONE SANS FIL DOTE D'UNE FONCTIONNALITE VOIX SUR IP ET POTS

(30) Priority: 23.09.2003 US 669578; 23.09.2003 US 669314
(43) Date of publication of application: 14.06.2006
(73) Proprietor: International Business Machines Corporation, Armonk, NY 10504 (US)
(72) Inventor: KUSNITZ, Jeffrey. IBM United Kingdom Lit., Winchester, Hampshire. SO21 2JN (GB); SLIWA, James, Raleigh, North Carolina 27613-2010 (US)
(74) Representative: Gascoyne, Belinda Jane
(86) International application number: PCT/EP2004/052161
(87) International publication number: WO 2005/029889

(56) References cited:
- US-A1- 2002 075 306
- US-B1- 6 205 135
- US-B1- 6 295 457
- US-B1- 6 351 464

## Description

### Technical Field

The invention relates to a wireless telephone handset and an intelligent base station that connects a call either to the public switched telephone network (PSTN) or to a packet network using Voice over IP (VoIP) based on a per call selection algorithm.

### Background Art

At the present time, it is becoming commonplace for users to communicate via speech using packet networks in lieu of the standard public switched telephone network. Voice over IP (Internet Protocol) is typically used to provide this capability. Users can select from a variety of products including wired VoIP desk sets and wireless systems that use both proprietary protocols between a handset and a base station, as well as the wireless LAN 802.11 protocols. Of course, users can also select from any number of wireless telephones that connect to the PSTN. However, if one wishes to avail him or herself with access to both types of networks, one must acquire a separate system for each, one for VoIP gateway dialing and the other for wireless traditional PSTN dialing, and manually select which system to use on any given telephone call.

US 62954571 discloses a telephone system comprising a mobile device and a base station. The base station is configured for routing data communications to a data network.

US 2002/075306 discloses a telephone system which uses presence indicators in order to indicate telephone numbers at which certain users might be contactable.

However, there remains a need for a system which can, responsive to selection of an entity to call, an available telephone number and also automatically select an appropriate communications network over which to route the call.

### Disclosure of the Invention

A first aspect of the present invention provides A telephone system comprising: a base station having a first connection to a circuit switched telephone network and a second connection to a packet switched network; and a mobile device for communicating speech to the base station using a wireless protocol; the base station comprising: apparatus for storing identification of one or more entities selectable by a user of the mobile device; apparatus for storing one or more telephone numbers associated with each entity, apparatus for receiving, via the packet switched network, one or more presence indicators, each associated with a stored telephone number; memory for storing the received presence indicators; and apparatus responsive to a selection of an entity by a user of the mobile device for selecting a telephone number for dialling based on the state of the presence indicators associated with the selected entity, and dialling the selected number; and apparatus for routing a call to the circuit-switched network or to the packet-switched network according to a user preference associated with the selected number.

The invention addresses the problems by providing a telephone system that in a first respect is capable of placing or receiving calls over the PSTN or a packet network. The preferred embodiment for packet communications is via the TCP/IP protocol. In a second aspect of the invention, the telephone system has the capability of storing multiple telephone numbers for each potential called party along with preferences that govern the order of selecting telephone numbers to service any given outgoing call. Some or all of the telephone numbers can be associated with a presence service. Cell phone operators already have the ability to collect and distribute presence indicators. Other telephones that are associated with computers can be associated with presence services at the present time. All telephones will no doubt have this capability at some time in the future. For the telephone numbers that are associated with a presence service, presence indicators stored in the telephone system are dynamically updated via the packet network connection and are used as part of the telephone number selection algorithm.

In the preferred embodiment, the telephone system is a wireless system comprising a base station and a handheld mobile device such as a wireless telephone handset or Personal Data Assistant (PDA) equipped with a microphone and speaker. A user of the telephone system configures the system over a Local Area Network (LAN) using a browser at a workstation. The mobile device or the base station could also be equipped as well to perform configuration using either a keypad or voice recognition technology. Configuration includes among other things adding names and telephone numbers to a database in the telephone system. Configuration also includes the selection of a preference algorithm to control the order in which telephone numbers are dialed to attempt connection with a called party and whether any given call is routed first over the packet network or the PSTN. The selection of PSTN or VOIP can be based on many algorithms. In the preferred embodiment, the user can configure the selection of routing by time of day or area code. Certainly, these preference algorithms are intended as examples and not to be limiting. The dynamically adjusted presence indicators, of course, play a large role in the selection of telephone numbers.

A second aspect of the invention provides a method for controlling a telephone system comprising a base station having a first connection to a circuit switched telephone network and a second connection to a packet switched network and a mobile device for communicating speech to the base station using a wireless protocol; the method comprising the base station: storing identification of one or more entities selectable by a user of the mobile device; storing one or more telephone numbers associated with each entity, receiving, via the packet switched network, one or more presence indicators, each associated with a stored telephone number; storing the received presence indicators; responsive to a selection of an entity by a user of the mobile device, selecting a telephone number for dialling based on the state of the presence indicators associated with the selected entity; and routing a call according to a user preference associated with the selected number.

### Brief Description of the Drawings

Fig. 1 shows block diagram of a wireless system, including a handset or handheld with a display and an intelligent base station, for practicing the invention;
Fig. 2 shows an illustrative block diagram of the intelligent base station;
Fig. 3 shows an illustrative block diagram of the handset or handheld of the wireless system;
Fig. 4 shows a screen image of a configuration menu that is displayed on a networked computer in a preferred embodiment of the system, or secondarily on a display of the handset or handheld;
Fig. 5 shows a computer display of a called party names list stored in the base station;
Fig. 6 shows a computer display image of a presence table stored in the base station and associated with potential called parties;
Fig. 7 shows an computer display image of a time-of-day routing preference table stored in the base station and used to select routing of a call over VoIP or POTS telephone lines;
Fig. 8 shows an alternative routing preference table bases on area code rather than time-of-day; and
Fig. 9 shows a functional flowchart of the steps that are performed in the course of placing a telephone call from the mobile handset or handheld.

### Mode(s) for carrying out the invention

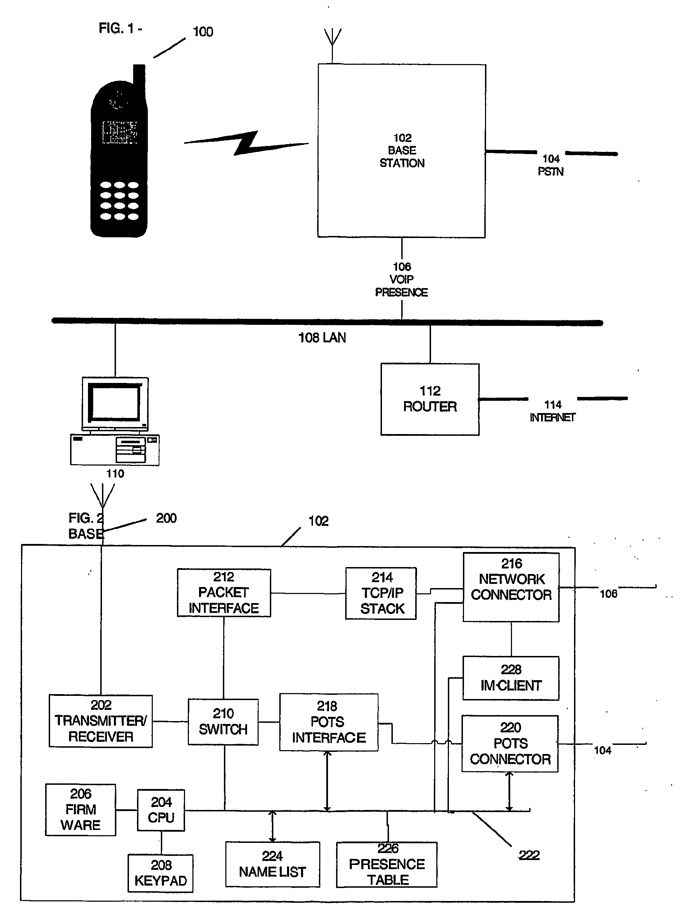

Fig. 1 shows a wireless mobile telephone handset 100 that communicates with a base station 102 using well-known wireless protocols. The base station has two ports for communicating with called parties. A first port 104 is a standard telephone connection for communicating with the public switched telephone network (PSTN) for POTS (Plain Old Telephone Service) telephone service. The second port 106 is a standard data connection for communicating with a data network, such as the Internet for telephone communication using Voice over IP (VoIP). In the preferred embodiment, the packet network connection 106 from the base station is connected to an internet 114 using a router 112 that is attached to a LAN 108. LAN 108 also connects to a computer 110 and base station 102. The base system is configured over the LAN 108 using a browser, such as Microsoft Internet Explorer, that is executed in a computer 110 attached to the base station 102 via the LAN 108. This technique of configuring network devices is well known and used typically to configure routers, bridges, etc. The packet connection 106 is also used to receive presence indications associated with potential called parties at designated telephone numbers, as will be explained below. These presence indications arrive from the internet 114 and are forwarded to base station 102 via LAN 108.

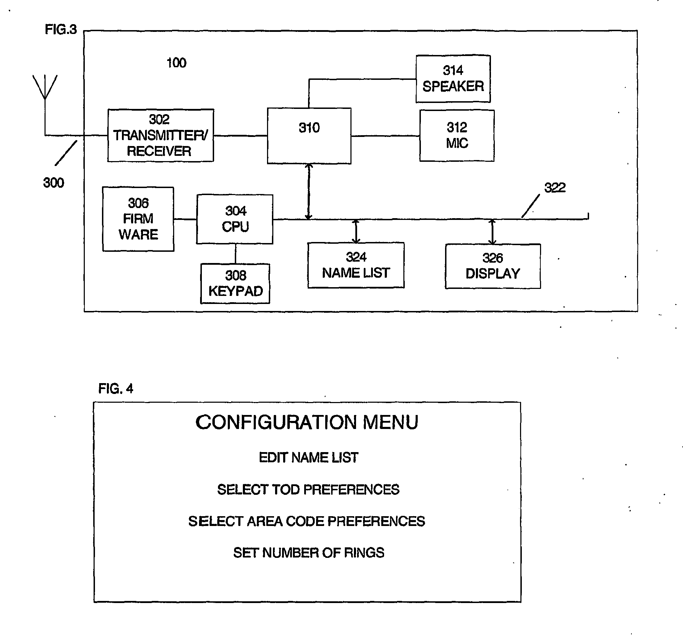

Fig. 2 shows an illustrative block diagram of the base station 102. It is equipped with an antenna 200 to communicate wirelessly with the handheld device 100. The antenna 200 is connected to a transmitter/receiver 202 over which digital data is transmitted between the handheld 100 and the base station 102 using wireless telephony protocols. The base station is controlled by a CPU (central processing unit) 204. CPU 204 is controlled by a firmware program and operating system embedded in firmware memory 206. CPU 204 also communicates with other portions of the base station via a data bus 222. The base station can also be equipped with a keypad 208, microphone and speaker (not shown) for additional convenience and functionality.

A switch 210 controls whether the base station communicates with the PSTN or with a data network. In the VoIP state, switch 210 connects the transmitter/receiver 202 to packet interface 212. Packet interface 212 performs the functions necessary to packetize data from the handheld 100 and send it to TCP/IP stack 214; for incoming data from the packet network via connector 216, packet interface 212 de-packetizes the data and sends it to the transmitter/receiver 202.

When switch 210 is in the POTS state, it connects the transmitter/receiver 202 to a POTS interface 218, which is conventional well-known apparatus in commercial use today for PSTN communication via the POTS connector 220.

The wireless system can be an analog system or a digital system. The fundamental technology for either type of system, including the transmitter/receiver 202 and the POTS and packet interfaces is commercially available in chip sets. Conexant, Inc., for example, is a leading manufacturer of wireless telephony digital and analog chips as well as technology for voice over IP.

A name list 224 is maintained in a random-access memory of the base station; the names list contains the names of people that can be called using the list, along with the information necessary to complete the calls. Also in random-access memory is a presence table 226 that contains information regarding the instant presence at specified telephones or devices of people in the names list 224. The name list and presence table are discussed in more detail below. One or more instant messaging (IM) clients 228 are also present in the memory of the base station to maintain the dynamic state of the presence table. The IM clients receive presence information from the Internet via the network connector 216. The IM clients are loaded into the base station using the computer 110 and the LAN 108 connection to the base station.

Fig. 3 contains a block diagram of the handheld 100. An antenna 300 communicates with base station 102 and connects to a transmitter/receiver 302 of the handheld. Like the base station, the handheld 100 also contains a CPU 304 controlled by a firmware program and operating system 306. CPU 304 communicates with other equipment in the handheld via a data bus 322. A keypad 308 allows the entry of telephone numbers if that mode of operation is desired by a caller. The handheld also contains a names list 324 in its random-access memory, but unlike the names list 224 in the base station, names list 324 contains only the names in the identical format as stored in the base station names list. Whenever the base station names list 224 is edited, when the user is completed and saves the table, the names only portion of the table is transmitted to the handheld and stored in its names list. When a caller activates the handheld names list 324, its contents are displayed on display 326. The caller can navigate through the list using buttons on the keypad or, with today's technology; a voice recognition chip can easily be used to allow a caller to verbally navigate the names list. The handheld also contains other equipment that is standard in wireless mobile units, illustrated here as 310, that connects to a microphone 312 and speaker 314.

The operation of the system is now described. Fig. 4 shows a sample menu of configuration services that is displayed to a user at computer 110 of Fig.1. This sample menu contains links for editing the name list, and for configuring time-of-day or area code preferences, and for setting the number of rings that determine when the system abandons a number as unanswered. As mentioned, the preferred way of configuring the base station is by using a browser such as the Microsoft Internet Explorer, although many other modes are possible and contemplated within the scope of the invention. Microsoft and Internet Explorer are trademarks of Microsoft Corporation in the United States, other countries, or both. The operating system contained in firmware 206 of the base station contains a server to communicate with the browser software at the computer 110. Name list 224 in the base station is edited by displaying its contents at the browser.

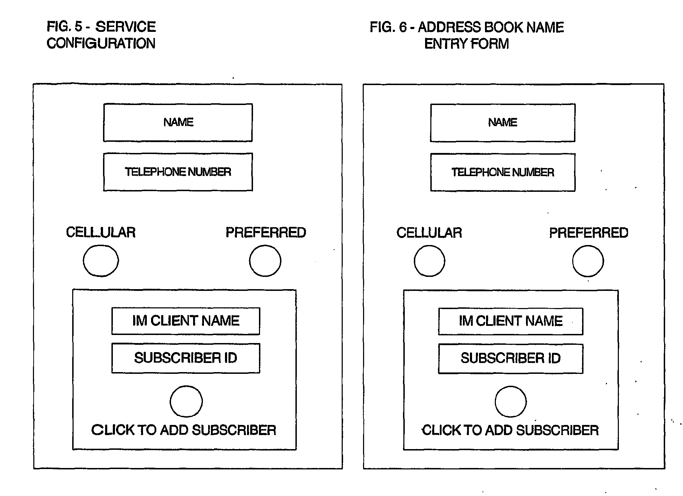

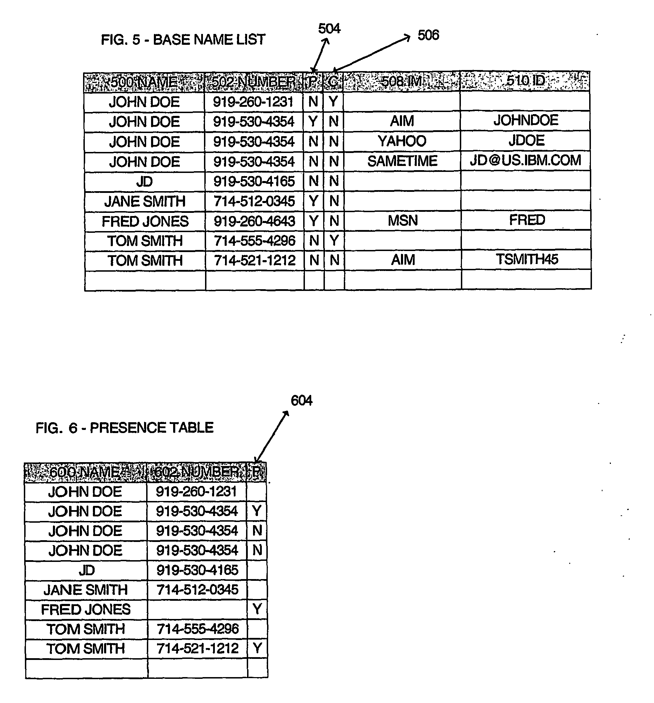

Fig. 5 shows an illustrative screen that is displayed at computer 110 for name entry, display and editing. Each entry of the name list contains a Name field 500, a Number field 502, a Preferred field 504, a Cell field 506, an Instant Message (IM) field 508, and an instant messaging ID field 510. In each entry, the name field 500 contains a person's name in any way that the user wishes to identify the person. The Number field 502 contains a telephone number associated with that person. As shown in the first four entries of the name list of Fig. 5, John Doe has at least four telephone numbers at which he might be reached. If "JD" in the fifth entry refers to the same John Doe, then he has five numbers entered into this list. The Preferred field 504 contains a flag that indicates a preference for a particular number. The Cellular field 506 contains a flag that identifies a number as belonging to a cell phone. The IM field 508 contains an identification of an instant messaging client if there is such a client associated with the particular telephone number. Each such client corresponds to an instance of IM client 228 in Fig. 2. There are presently a number of possible IM services, such as offered by Lotus^{™} Sametime^{™}, ICQ^{™}, Yahoo^{™}, AOL^{™} and Microsoft's MSN.^{™} (Lotus and Sametime are registered trademarks of IBM Corporation in the United States, other countries or both.) Some of these services are free and require only a registration via the World-Wide-Web. In Fig. 5, John Doe has registered with three such services; AOL^{™} Instant Messaging (AIM), Yahoo^{™} and Sametime^{™}.

Each service is associated with a different telephone number, and each requires a different IM client loaded as an instance of IM Client 228. Each service has a different format for a user identification and the user identification is placed in the ID field 510 of Fig. 5. For example, John Doe's ID for AIM is "JOHNDOE". On the other hand, Sametime^{™} uses an internet e-mail address as the user ID. John Doe's e-mail address is jd@us.ibm.com. New entries are created by positioning the cursor in the desired field of the row 512 at the bottom of the screen and typing in the contents of the field. This is a data entry technique that is used by many database programs, such as Microsoft Access for example. The same entry technique is used for the tables shown in Figs. 6, 7 and 8 as well.

For each entry in the names list (Fig. 5), there is a corresponding entry in the Presence Table, as shown in Fig. 6. The names are shown in Fig. 6, but that is primarily for clarity here; only a number field is actually required in the preferred embodiment. The P (presence) field 604 contains a flag that is set or reset dynamically as a person associated with an IM service logs into and off of the service. A "Y" indicates that a person is logged in at the number associated with the IM service. A "N" indicates that the person is not logged-in; an empty field means that the telephone number is not associated with an IM service. Each presence service generates a presence or non-presence message, along with a telephone number, as its registered members log on and off of a service, and these messages are transmitted in real-time to interested people. Such messages are received over the Internet by an IM Client 228 and communicated to the appropriate entry in the presence table identified by the received number. This is conventional service at this time that differs in operation somewhat with the different services, but RFCs 2778 and 2779 have been proposed by the Internet Engineering Task Force to attempt to establish an operational standard.

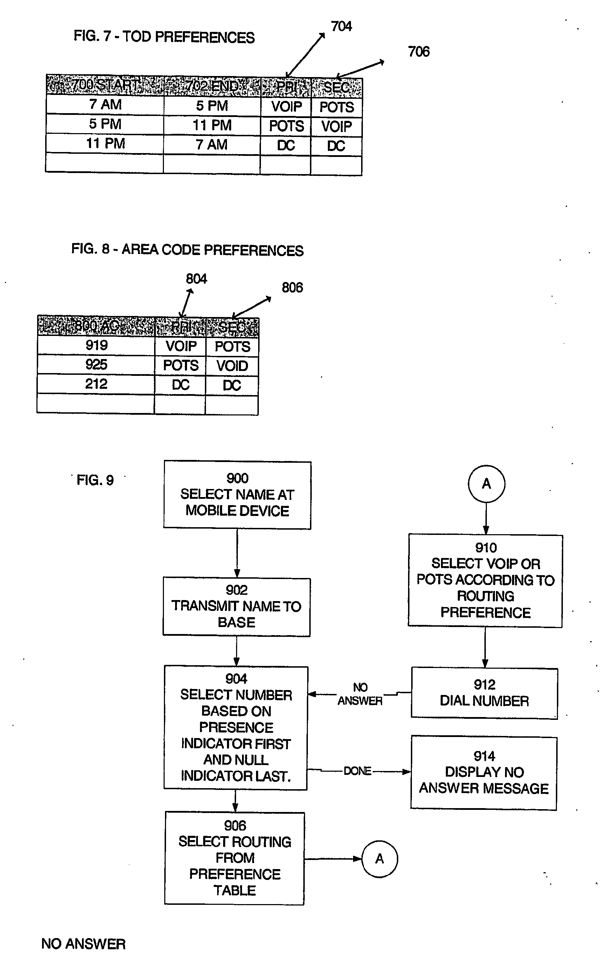

The user can establish preferences for the routing of calls. Obviously, there are many alternative ways of defining user preferences. Two alternative preferences are taught here for illustrative purposes, a time-of-day (TOD) preference, and an area code (AC) preference. A user selects which service he or she wishes by means of the browser menu in Fig. 4. If a user selects TOD preferences, the TOD preferences table in Fig. 7 is displayed by the browser. By way of example, each entry of this table contains a start time field 700, an end time field 702, a primary field 704 and a secondary field 706. The start and end fields of an entry define an interval of time in which the preferred call routing is specified by the primary field 704. If a call is unsuccessful via the preferred route (VoIP or POTS), and if there is a secondary entry, then the call is re-tried via the secondary route. If there is no entry in the secondary field, this means the user never wants to use that routing in the defined time interval. If a routing field contains a "DC" (don't care) entry, then a call is placed in the associated time interval by the base station making arbitrary selection as to primary and secondary routing.

If the user prefers to route calls according to area code, then the user configures the table shown in Fig. 8, using the menu of Fig. 4. Each entry of the AC table has an AC field 800 that contains a desired area code. The primary field 804 and the secondary field 806 are used in the same way as described above for TOD preferences.

Fig. 9 contains an illustrative functional flowchart of actions performed to place a telephone call. At step 900, a user activates the name list 324 stored in the handheld 100 and navigates to the name of the person he or she wishes to call. The user then initiates the call by depressing a CALL key or equivalent. As a result, the selected name is transmitted to the base station 102 at step 902. The selected name is received at the base station at step 904 and used to search for an entry in the name list 224 of the base station. If the selected name is "John Doe" for example, a preferred name entry is found at the second John Doe entry at telephone number 919-530-4354, as indicated by the Y in the Preferred field 504. This particular number is not associated with a cellular phone, as indicated by the N in the Cellular field 506. However, field 508 indicates that this phone is associated with the AOL IM service AIM. The base station therefore, interrogates the second entry of the Presence table in Fig. 6 to determine if John Doe is present at this telephone location. Field 604 of the presence table indicates that John Doe is present at number 919-530-4354. Therefore, the base station places a call to the preferred number 919-530-4354 for John Doe. If the Presence table had indicated that John Doe was not present (N in field 604) at the preferred number, the base station would then look for an entry for John Doe in the Presence table for which the presence indicator 604 is set. Failing that, the base station would lastly look for a presence entry that is null (neither Y nor N). Such a null state means that there is no presence service associated with the corresponding telephone number. The base station would therefore dial this number last, and of course there may be plural such telephone numbers that might be dialed in sequence until John Doe is located or the list of possible numbers is exhausted. If it is assumed that the Y entry for John Doe in the presence field 604 were in fact a N, then base station 102 would select the number 919-260-1231 from the first entry, because that's the only number at which John Doe might be present.

After a number has been selected at step 904, step 906 interrogates a preference table to determine the routing (VoIP or POTS) of the call. If the user has selected time-of-day (TOD) routing, the TOD table in Fig. 7 is interrogated. Assuming that it is 10 AM in the morning for example, the TOD table indicates (field 704) that VoIP is the primary routing choice. The base station controls switch 210 to select the VoIP path to TCP/IP connector 216 and the call is then placed in a conventional VoIP fashion at step 910. If that call fails for any reason, or if the call is unanswered after a specified number of rings (see Fig. 4 and 912 in Fig. 9), or if the caller initiates a disconnect from the keypad 208, the base station continues to step 914 and examines the secondary routing field 706 of Fig. 7 for a secondary routing (POTS in this example). If a secondary routing is specified, then the base station re-tries the call at 914 using the secondary preference. If the user has not specified a secondary routing preference, as at field 706 of the second TOD entry (5 PM to 11 PM), then the base station will not re-try the call to this particular number. At 916, the base station returns to step 904 to search for another telephone number to try. Eventually, a call will be successful (which is not shown in Fig. 9) or all possibilities will have been exhausted. The preferred embodiment in the latter case displays an appropriate no answer message on the display 326, as illustrated at 920 of Fig. 9, if the call is ultimately unsuccessful.

## Claims

1. A telephone system comprising: a base station (102) having a first connection (104) to a circuit switched telephone network and a second connection (100) to a packet switched network; and a mobile device (100) for communicating speech to the base station using a wireless protocol;
the base station comprising: apparatus for storing identification of one or more entities selectable by a user of the mobile device; apparatus for storing one or more telephone numbers associated with each entity, apparatus (202) for receiving, via the packet switched network, one or more presence indicators, each associated with a stored telephone number;
memory for storing the received presence indicators; and apparatus responsive to a selection of an entity by a user of the mobile device for selecting a telephone number for dialling based on the state of the presence indicators associated with the selected entity, and dialling the selected number; and
apparatus for routing a call to the circuit-switched network or to the packet-switched network according to a user preference associated with the selected number.

2. A telephone system according to claim 1, comprising apparatus for placing calls over a circuit-switched telephone network and apparatus (216) for placing calls over the packet-switched network.

3. A telephone system according to claim 1 or 2, in which the base station further comprises apparatus (210) for selecting either the first connection or the second connection for routing of a call from the mobile device based on a predefined selection algorithm.

4. A telephone system according to any preceding claim, wherein the base station (102) further comprises a memory for storing user routing preferences based on time-of-day or based on an area code of the selected number.

5. A telephone system according to claim 3, wherein the selecting apparatus further comprises a switch (210), and the base station apparatus further comprises a packet interface (212) and protocol stack (214) between a first port of the switch and the second connector (216) and a telephone interface (218) between a second port of the switch and the first connector (220).

6. A telephone system according to claim 5, further comprising a central processing unit (204) under the control of programmed instructions for controlling the switch (210) to select either the packet interface (212) or the telephone interface to service a call based on the predefined selection algorithm.

7. A telephone system according to claim 5 or 6, wherein the packet interface (212) comprises means for converting signals from the mobile device into digital packets compatible with the protocol stack (214) connected to the second connection.

8. A telephone system according to claim 5 or 6, wherein the packet interface (212) comprises means for converting packets received from the protocol stack (214) into signals for transmission to the mobile device (100).

9. A telephone system according to claim 5 or 6, wherein the telephone interface (218) comprises means for converting signals from the mobile device (100) into analogue signals for transmission to the first connector (220).

10. A telephone system according to claim 5 or 6, wherein the telephone interface (218) comprises means for converting analogue signals from the first connector (220) into signals for transmission to the mobile device (100).

11. A telephone system according to any preceding claim, wherein the mobile device (100) comprises a) a memory for storing names of the entities, b) means allowing a user to select an entity for dialling, and c) means for transmitting a name of a selected entity to the base station.

12. A telephone system according to any preceding claim, further comprising apparatus responsive to an unanswered telephone call for determining if additional numbers are stored for the called entity and re-trying a call to such an additional telephone number.

13. A method for controlling a telephone system comprising a base station (102) having a first connection (104) to a circuit switched telephone network and a second connection (106) to a packet switched network and a mobile device (100) for communicating speech to the base station (102) using a wireless protocol; the method comprising the base station (102): storing identification of one or more entities selectable by a user of the mobile device (100); storing one or more telephone numbers associated with each entity, receiving, via the packet switched network, one or more presence indicators, each associated with a stored telephone number; storing the received presence indicators; responsive to a selection of an entity by a user of the mobile device, selecting (904) a telephone number for dialling based on the state of the presence indicators associated with the selected entity; and routing (906) a call according to a user preference associated with the selected number.

14. A method according to claim 13, further comprising selectively placing calls over a circuit-switched telephone network or over the packet-switched network.

15. A method according to claim 13 or 14, wherein the step of storing telephone numbers further comprises storing at the base station identification of entities, telephone numbers associated with the entities and presence indicators, and storing at the mobile device names of the entities.

16. A method according to claim 15, further comprising allowing a user of the mobile device to select (900) an entity for dialling, and transmitting (902) a name of the selected entity to the base station.

17. A method according to any of claims 13 to 16, further comprising storing user routing preferences based on time-of-day or based on an area code of the selected number.

18. The method of any of claims 13 to 17 further comprising the steps of determining if additional numbers are stored for the called entity responsive to an unanswered telephone call and re-trying a call to such an additional telephone number.

19. A computer storage medium for storing a computer software program which when loaded into a computer controlled telephone system and executed controls the telephone system to perform a method according to any of claims 13 to 18.

20. A carrier wave containing a computer software program which when loaded into a computer controlled telephone system and executed controls the telephone system to perform a method according to any of claims 13 to 18.

21. A telephone system according to any of claims 1 to 12, wherein the mobile device (100) comprises apparatus (302) for transmitting an identification selected by a user of the mobile device to the base station, and the base station comprising apparatus for storing one or more network addresses associated with an identification for calling an entity, and for interrogating an entity presence indicator associated with a network address to determine if the user is located at that network address.

## Patentansprüche

1. Telefonsystem, das Folgendes umfasst: eine Basisstation (102) mit einer ersten Verbindung (104) zu einem leitungsvermittelten Telefonnetz und einer zweiten Verbindung (106) zu einem Paketvermittlungsnetz; sowie eine Mobileinheit (100) für das Übertragen von Sprachdaten an die Basisstation unter Verwendung eines Funkprotokolls.
wobei die Basisstation Folgendes umfasst: eine Vorrichtung für das Speichern der Kennung einer oder mehrerer Einheiten, die von einem Benutzer der Mobileinheit ausgewählt werden können; eine Vorrichtung für das Speichern einer oder mehrerer Telefonnummern, die einer jeden Einheit zugehörig sind; eine Vorrichtung (202) für das Empfangen eines oder mehrerer Anwesenheitsanzeiger, die jeweils einer gespeicherten Telefonnummer zugehörig sind, über das Paketvermittlungsnetz;
einen Speicher für das Speichern der empfangenen Anwesenheitsanzeiger; und eine Vorrichtung, die als Reaktion auf eine Auswahl einer Einheit durch einen Benutzer der Mobileinheit ausgehend vom Zustand der Anwesenheitsanzeiger, die der ausgewählten Einheit zugehörig sind, eine Telefonnummer auswählt und die ausgewählte Nummer wählt; und
eine Vorrichtung für das Durchleiten eines Anrufs an das leitungsvermittelte Netz oder das Paketvermittlungsnetz gemäß einer Benutzereinstellung, die der ausgewählten Nummer zugehörig ist.

2. Telefonsystem nach Anspruch 1, das eine Vorrichtung für das Tätigen von Anrufen über ein leitungsvermittelte Netz sowie eine Vorrichtung (216) für das Tätigen von Anrufen über das Paketvermittlungsnetz umfasst.

3. Telefonsystem nach Anspruch 1 oder 2, bei dem die Basisstation ferner eine Vorrichtung (210) für das Auswählen der ersten Verbindung oder der zweiten Verbindung umfasst, um einen Anruf auf Grundlage eines vordefinierten Auswahlalgorithmus von der Mobileinheit durchzuleiten.

4. Telefonsystem nach einem beliebigen vorangegangenen Anspruch, wobei die Basisstation (102) weiter einen Speicher umfasst, in dem bevorzugte Benutzerleitwege auf Grundlage der Uhrzeit oder eines Gebietscodes der ausgewählten Nummer gespeichert werden.

5. Telefonsystem nach Anspruch 3, wobei die Auswahlvorrichtung ferner eine Vermittlungseinheit (210) und die Basisstationsvorrichtung ferner eine Paketschnittstelle (212) und einen Protokollstapel (214) zwischen einem ersten Anschluss der Vermittlungseinheit und dem zweiten Verbindungselement (216) sowie eine Telefonschnittstelle (218) zwischen einem zweiten Anschluss der Vermittlungseinheit und dem ersten Verbindungselement (220) umfasst.

6. Telefonsystem nach Anspruch 5, das weiter eine Zentraleinheit (204) unter der Steuerung durch programmierte Befehle umfasst, um die Vermittlungseinheit (210) so zu steuern, dass sie entweder die Paketschnittstelle (212) oder die Telefonschnittstelle auswählt, um auf Grundlage des vordefinierten Auswahlalgorithmus einen Anruf zu verarbeiten.

7. Telefonsystem nach Anspruch 5 oder 6, wobei die Paketschnittstelle (212) ein Mittel für die Umwandlung von Signalen von der Mobileinheit in digitale Datenpakete umfasst, die mit dem Protokollstapel (214) kompatibel sind, welcher mit der zweiten Verbindung verbunden ist.

8. Telefonsystem nach Anspruch 5 oder 6, wobei die Paketschnittstelle (212) ein Mittel für die Umwandlung von Datenpaketen, die von dem Protokollstapel (214) empfangen wurden, in Signale umfasst, die an die Mobileinheit (100) übertragen werden.

9. Telefonsystem nach Anspruch 5 oder 6, wobei die Telefonschnittstelle (218) ein Mittel für die Umwandlung von Signalen von der Mobileinheit (100) in Analogsignale umfasst, die an den ersten Verbindungselement (220) übertragen werden.

10. Telefonsystem nach Anspruch 5 oder 6, wobei die Telefonschnittstelle (218) ein Mittel für die Umwandlung von Analogsignalen von dem ersten Verbindungselement (220) in Signale umfasst, die an die Mobileinheit (100) übertragen werden.

11. Telefonsystem nach einem beliebigen vorangegangenen Anspruch, wobei die Mobileinheit (100) a) einen Speicher für das Speichern von Namen der Einheiten, b) ein Mittel, das einem Benutzer die Auswahl einer Einheit für das Wählen ermöglicht, und c) ein Mittel für das Übertragen eines Namens einer ausgewählten Einheit an die Basisstation umfasst.

12. Telefonsystem nach einem beliebigen vorangegangenen Anspruch, das weiter eine Vorrichtung umfasst, die auf einen unbeantworteten Telefonanruf reagiert, um zu ermitteln, ob zusätzliche Nummern für die angerufene Einheit gespeichert sind, und einen Anruf an eine derartige zusätzliche Telefonnummer erneut zu versuchen.

13. Verfahren für das Steuern eines Telefonsystems, das eine Basisstation (102) mit einer ersten Verbindung (104) zu einem leitungsvermittelten Netz und eine zweite Verbindung (106) zu einem Paketvermittlungsnetz sowie eine Mobileinheit (100) für das Übertragen von Sprachdaten an die Basisstation (102) unter Verwendung eines Funkprotokolls umfasst; wobei das die Basisstation umfassende Verfahren: eine Kennung einer oder mehrerer Einheiten, die von einem Benutzer der Mobileinheit ausgewählt werden können, speichert; eine oder mehrere Telefonnummern, die einer jeden Einheit zugehörig sind, speichert; einen oder mehrere Anwesenheitsanzeiger, die jeweils einer gespeicherten Telefonnummer zugehörig sind, über das Paketvermittlungsnetz empfängt; die empfangenen Anwesenheitsanzeiger speichert; als Reaktion auf eine Auswahl einer Einheit durch einen Benutzer der Mobileinheit (904) eine Telefonnummer, die ausgehend vom Zustand der Anwesenheitsanzeiger, die der ausgewählten Einheit zugehörig sind, auswählt; und (906) einen Anruf gemäß einer Benutzereinstellung, die der ausgewählten Nummer zugehörig ist, durchleitet.

14. Verfahren nach Anspruch 13, das weiter das wahlweise Tätigen von Anrufen über ein leitungsvermitteltes Netz oder über das Paketvermittlungsnetz umfasst.

15. Verfahren nach Anspruch 13 oder 14, wobei der Schritt des Speicherns von Telefonnummern ferner in der Basisstation das Speichern einer Kennung von Einheiten, von Telefonnummern, die den Einheiten zugehörig sind, und von Anwesenheitsanzeigern sowie in der Mobileinheit das Speichern von Namen der Einheiten umfasst.

16. Verfahren nach Anspruch 15, das weiter umfasst, einem Benutzer der Mobileinheit zu ermöglichen, eine Einheit zum Wählen auszuwählen (900), sowie einen Namen der ausgewählten Einheit an die Basisstation zu übertragen (902).

17. Verfahren nach einem beliebigen der Ansprüche 13 bis 16, das weiter das Speichern von bevorzugten Benutzerleitwegen auf Grundlage der Uhrzeit oder eines Gebietscodes der ausgewählten Nummer umfasst.

18. Verfahren nach einem beliebigen der Ansprüche 13 bis 17, das weiter die Schritte umfasst, als Reaktion auf einen unbeantworteten Telefonanruf zu ermitteln, ob zusätzliche Nummern für die angerufene Einheit gespeichert sind, und einen Anruf an eine derartige zusätzliche Telefonnummer erneut zu versuchen.

19. Computerspeichermedium für das Speichern eines Computersoftwareprogramms, das, wenn es in einen computergesteuertes Telefonsystem geladen und ausgeführt wird, das Telefonsystem so steuert, dass ein Verfahren nach einem beliebigen der Ansprüche 13 bis 18 ausgeführt wird.

20. Eine Trägerwelle mit einem Computersoftwareprogramm, das, wenn es in ein computergesteuertes Telefonsystem geladen und ausgeführt wird, das Telefonsystem so steuert, dass es ein Verfahren nach einem beliebigen der Ansprüche 13 bis 18 ausführt.

21. Telefonsystem nach einem beliebigen der Ansprüche 1 bis 12, wobei die Mobileinheit (100) eine Vorrichtung (302) für das Übertragen einer Kennung, die von einem Benutzer der Mobileinheit ausgewählt wurde, an die Basisstation umfasst, und wobei die Basisstation eine Vorrichtung für das Speichern einer oder mehrerer Netzwerkadressen, die einer Kennung zugehörig sind, um eine Einheit anzurufen, sowie für das Abfragen eines Anzeigers für die Anwesenheit einer Einheit, der einer Netzwerkadresse zugehörig ist, umfasst, um zu ermitteln, ob sich der Benutzer unter der Netzwerkadresse befindet.

## Revendications

1. Système téléphonique comprenant : une station de base (102) ayant une première connexion (104) à un réseau téléphonique à commutation de circuits et une seconde connexion (106) à un réseau à commutation de paquets, et un dispositif mobile (100) destiné à communiquer de la parole vers la station de base en utilisant un protocole sans fil,
la station de base comprenant :
un appareil destiné à mémoriser l'identification d'une ou plusieurs entités pouvant être sélectionnées par un utilisateur du dispositif mobile, un appareil destiné à mémoriser un ou plusieurs numéros de téléphone associés à chaque entité, un appareil (202) destiné à recevoir, par l'intermédiaire du réseau à commutation de paquets, un ou plusieurs indicateurs de présence, chacun étant associé à un numéro de téléphone mémorisé,
une mémoire destinée à mémoriser les indicateurs de présence reçus et un appareil répondant à la sélection d'une entité par un utilisateur du dispositif mobile pour sélectionner un numéro de téléphone à composer sur la base de l'état des indicateurs de présence associés à l'entité sélectionnée, et pour composer le numéro sélectionné, et
un appareil destiné à acheminer un appel vers le réseau à commutation de circuits ou le réseau à commutation de paquets conformément à une préférence de l'utilisateur associée au numéro sélectionné.

2. Système téléphonique selon la revendication 1, comprenant un appareil destiné à effectuer des appels sur un réseau téléphonique à commutation de circuits et un appareil (216) destiné à effectuer des appels sur le réseau à commutation de paquets.

3. Système téléphonique selon la revendication 1 ou 2, dans lequel la station de base comprend en outre un appareil (210) destiné à sélectionner soit la première connexion, soit la seconde connexion pour acheminer un appel à partir du dispositif mobile sur la base d'un algorithme de sélection prédéfini.

4. Système téléphonique selon l'une quelconque des revendications précédentes, dans lequel la station de base (102) comprend en outre une mémoire destinée à mémoriser des préférences d'acheminement de l'utilisateur sur la base de l'heure de la journée ou sur la base d'un indicatif régional du numéro sélectionné.

5. Système téléphonique selon la revendication 3, dans lequel l'appareil de sélection comprend en outre un commutateur (210), et l'appareil de la station de base comprend en outre une interface de paquets (212) et une pile de protocoles (214) entre un premier point d'accès du commutateur et le second connecteur (216) et une interface téléphonique (218) entre un second point d'accès du commutateur et le premier connecteur (220).

6. Système téléphonique selon la revendication 5, comprenant en outre une unité de traitement centrale (204) sous la commande d'instructions programmées destinées à commander au commutateur (210) de sélectionner soit l'interface de paquets (212), soit l'interface téléphonique pour prendre en charge un appel sur la base de l'algorithme de sélection prédéfini.

7. Système téléphonique selon la revendication 5 ou 6, dans lequel l'interface de paquets (212) comprend un moyen destiné à convertir les signaux provenant du dispositif mobile en paquets numériques compatibles avec la pile de protocoles (214) connectée à la seconde connexion.

8. Système téléphonique selon la revendication 5 ou 6, dans lequel l'interface de paquets (212) comprend un moyen destiné à convertir les paquets reçus de la pile de protocoles (214) en signaux en vue d'une transmission au dispositif mobile (100).

9. Système téléphonique selon la revendication 5 ou 6, dans lequel l'interface téléphonique (218) comprend un moyen destiné à convertir des signaux provenant du dispositif mobile (100) en signaux analogiques en vue d'une transmission au premier connecteur (220).

10. Système téléphonique selon la revendication 5 ou 6, dans lequel l'interface téléphonique (218) comprend un moyen destiné à convertir des signaux analogiques provenant du premier connecteur (220) en signaux en vue d'une transmission au dispositif mobile (100).

11. Système téléphonique selon l'une quelconque des revendications précédentes, dans lequel le dispositif mobile (100) comprend a) une mémoire destinée à mémoriser les noms des entités, b) un moyen permettant à un utilisateur de sélectionner une entité pour la numérotation et c) un moyen destiné à transmettre un nom d'une entité sélectionnée à la station de base.

12. Système téléphonique selon l'une quelconque des revendications précédentes, comprenant en outre un appareil répondant à un appel téléphonique resté sans réponse pour déterminer si des numéros supplémentaires sont mémorisés pour l'entité appelée et pour essayer à nouveau un appel vers un tel numéro de téléphone supplémentaire.

13. Procédé de commande d'un système téléphonique comprenant une station de base (102) ayant une première connexion (104) à un réseau téléphonique à commutation de circuits et une seconde connexion (106) à un réseau à commutation de paquets et un dispositif mobile (100) destiné à communiquer de la parole vers la station de base (102) en utilisant un protocole sans fil, le procédé comprenant le fait que la station de base (102) : mémorise l'identification d'une ou plusieurs entités pouvant être sélectionnées par un utilisateur du dispositif mobile (100), mémorise un ou plusieurs numéros de téléphone associés à chaque entité, en recevant, par l'intermédiaire du réseau à commutation de paquets, un ou plusieurs indicateurs de présence, chacun étant associé à un numéro de téléphone mémorisé, mémorise les indicateurs de présence reçus, en réponse à une sélection d'une entité par un utilisateur du dispositif mobile, sélectionne (904) un numéro de téléphone à composer sur la base de l'état des indicateurs de présence associés à l'entité sélectionnée et achemine (906) un appel conformément à une préférence de l'utilisateur associée au numéro sélectionné.

14. Procédé selon la revendication 13, comprenant en outre le fait d'effectuer sélectivement des appels sur un réseau téléphonique à commutation de circuits ou sur le réseau à commutation de paquets.

15. Procédé selon la revendication 13 ou 14, dans lequel l'étape de mémorisation de numéros de téléphone comprend en outre la mémorisation au niveau de la station de base de l'identification d'entités, de numéros de téléphone associés aux entités et d'indicateurs de présence, et la mémorisation au niveau du dispositif mobile des noms des entités.

16. Procédé selon la revendication 15, comprenant en outre le fait de permettre à un utilisateur du dispositif mobile de sélectionner (900) une entité pour la numérotation et la transmission (902) d'un nom de l'entité sélectionnée à la station de base.

17. Procédé selon l'une quelconque des revendications 13 à 16, comprenant en outre la mémorisation des préférences d'acheminement de l'utilisateur sur la base de l'heure de la journée ou sur la base d'un indicatif régional du numéro sélectionné.

18. Procédé selon l'une quelconque des revendications 13 à 17, comprenant en outre les étapes consistant à déterminer si des numéros supplémentaires sont mémorisés pour l'entité appelée en réponse à un appel téléphonique resté sans réponse et à essayer à nouveau un appel vers un tel numéro de téléphone supplémentaire.

19. Support de mémorisation informatique destiné à mémoriser un programme logiciel informatique qui, lorsqu'il est chargé dans un système téléphonique commandé par ordinateur et exécuté, commande le système téléphonique pour qu'il exécute un procédé selon l'une quelconque des revendications 13 à 18.

20. Onde porteuse contenant un programme logiciel informatique qui, lorsqu'il est chargé dans un système téléphonique commandé par ordinateur et exécuté, commande le système téléphonique pour qu'il exécute un procédé selon l'une quelconque des revendications 13 à 18.

21. Système téléphonique selon l'une quelconque des revendications 1 à 12, dans lequel le dispositif mobile (100) comprend un appareil (302) destiné à transmettre une identification sélectionnée par un utilisateur du dispositif mobile à la station de base, et la station de base comprenant un appareil destiné à mémoriser une ou plusieurs adresses de réseau associées à une identification pour appeler une entité, et destiné à interroger un indicateur de présence d'entité associé à une adresse de réseau pour déterminer si l'utilisateur est localisé à cette adresse de réseau.
